# EUROPÄISCHE PATENTSCHRIFT

(11) **EP 0 826 753 B1**
(45) Veröffentlichungstag und Bekanntmachung des Hinweises auf die Patenterteilung: **17.12.2003**
(21) Anmeldenummer: 97114236.9
(22) Anmeldetag: 18.08.1997
(51) Int. Cl.: C09D 175/04

(54) **Neue Dispergierhilfsmittel für wässrige Lacke**
New dispersion aid for aqueous lacquers
Nouvel adjuvant dispersant pour les laques aqueuses

(30) Priorität: 30.08.1996 DE 19635065
(43) Veröffentlichungstag der Anmeldung: 04.03.1998
(73) Patentinhaber: BAYER AG, 51368 Leverkusen (DE)
(72) Erfinder: Wamprecht, Christian, Dr., 41472 Neuss (DE); Wilmes, Oswald, Dr., 51061 Köln (DE); Kirchmeyer, Stephan, Dr., 51375 Leverkusen (DE); Mazanek, Jan, Dr., 51061 Köln (DE)

(56) Entgegenhaltungen:
- EP-A- 0 335 197
- EP-A- 0 520 586

## Beschreibung

Die Erfindung betrifft neue wasserlösliche Polyisocyanat-Additionsprodukte auf Basis ausgewählter Ausgangsmaterialien, ein Verfahren zu ihrer Herstellung und ihre Verwendung als Dispergierhilfsmittel bei der Einarbeitung von Feststoffen in wäßrige Lacke oder Beschichtungsmittel.

Um Feststoffe in flüssige Medien einzubringen, sind hohe mechanische Kräfte notwendig. Dies hängt in hohem Maß von der Benetzbarkeit des Feststoffs durch das umgebende Medium sowie von der Affinität zu diesem Medium ab. Um diese Dispergierkräfte zu reduzieren, ist es üblich, Dispergierhilfsmittel anzuwenden, welche die Einarbeitung erleichtern. Hierbei handelt es sich meistens um oberflächenaktive Stoffe (Tenside) von anionen- oder kationenaktiver sowie nichtionogener Struktur. Diese Stoffe werden in relativ geringen Zusatzmengen entweder auf den Feststoff direkt aufgebracht oder dem Dispergiermedium zugesetzt. Durch ein solches Tensid wird der Dispergieraufwand wesentlich reduziert.

Bekannt ist weiterhin, daß diese Feststoffe nach dem Dispergieren wieder zum Reagglomerieren neigen, was den zuvor aufgewendeten Dispergieraufwand zunichte macht und zu gravierenden Problemen führt. Dieses Phänomen erklärt man sich durch London/van der Waalsche Kräfte, durch welche sich die Feststoffe gegenseitig anziehen. Um diese Anziehungskräfte zu überlagern, müssen Absorptionsschichten auf die Feststoffe aufgebracht werden. Dies geschieht durch die Verwendung solcher Tenside.

Während und nach der Dispergierung tritt jedoch eine Wechselwirkung des umgebenden Mediums mit dem Feststoffpartikel ein, und es erfolgt eine Desorption des Tensids unter Austausch gegen das, in höherer Konzentration vorliegende, umgebende Medium. Dieses umgebende Medium ist jedoch in den meisten Fällen nicht in der Lage, solche stabilen Absorptionsschichten aufzubauen und das ganze System bricht zusammen. Dies macht sich z. B. bemerkbar durch Viskositätsanstieg in flüssigen Systemen sowie Glanzverluste und Farbtonverschiebungen in Lacken und Beschichtungen.

Es fehlte daher nicht an Versuchen, wirksame Dispergiermittel für Feststoffe, insbesondere Pigmente zur Verfügung zu stellen, die insbesondere die Einarbeitung von derartigen Feststoffen in Lösungsmittel enthaltende Lacke der an sich bekannten Art erleichtern und die Herstellung von sedimentationsstabilen Beschichtungsmitteln gestatten. So werden beispielsweise in der EP-A 0 154 678, EP-A 0 205 510 oder EP-A 0 335 197 für diesen Zweck gut geeignete Dispergierhilfsmittel beschrieben.

Die Dispergierhilfsmittel der genannten Dokumente basieren auf Polyisocyanaten mit einer Funktionalität von ≥ 2,5. Aufgrund dieser hohen Funktionalität sind die Polyisocyanate meist sehr hochviskos und nur als verdünnte Lösungen mit beträchtlichen Anteilen an organischen Lösemitteln herstell- und verfügbar. Diese Lösemittel können dann im Endprodukt störend wirken, insbesondere wenn es sich um Dispergierhilfsmittel für wäßrige Lacksysteme handelt. Die Lösemittel müssen daher nach der Herstellung des Dispergierhilfsmittels destillativ entfernt werden, was mit längeren Fertigungszeiten und höherem Kostenaufwand verbunden ist.

Dispergierhilfsmittel auf Basis von Polyisocyanaten mit einer Funktionalität von ≤ 2,5 weisen, wie dem Fachmann bekannt, nicht die gewünschte hohe Wirksamkeit der oben beschriebenen Dispergiermittel auf.

Die Aufgabe der Erfindung bestand darin, ein neues Verfahren zur Herstellung hochwirksamer Dispergiermittel bereitzustellen, bei dem niedrigviskose Polyisocyanate zum Einsatz gelangen und wobei auf die Verwendung von organischen Lösemitteln völlig verzichtet werden kann. Die durch das neue Verfahren zugänglichen Dispergierhilfsmittel sollten insbesondere auch zur Dispergierung von Feststoffen, besonders Pigmenten, in wäßrige Lacksysteme geeignet sein.

Mit den nachstehend nach dem erfindungsgemäßen Verfahren zugänglichen erfindungsgemäßen Dispergiermitteln ist es überraschend gelungen, die genannte Aufgabe zu lösen.

Gegenstand der Erfindung ist ein Verfahren zur lösemittelfreien Herstellung von Dispergierhilfsmitteln für Feststoffe, insbesondere Pigmente, bei deren Einarbeitung in wäßrige Lacke und Beschichtungsmittel, dadurch gekennzeichnet, daß wasserlösliche, hydrophile Polyetherketten aufweisende Polyisocyanat-Additionsprodukte mit einem Gehalt an Isocyanatgruppen von max. 1 Gew.-% und einem Gehalt an über monofunktionelle Alkohole B) eingebauten, innerhalb von Polyetherketten angeordneten Ethylenoxideinheiten (Molekulargewicht = 44) von 30 bis 90 Gew.-% hergestellt werden durch Umsetzung von
A) einer Polyisocyanat-Komponente einer (mittleren) NCO-Funktionalität von 1,7 bis 2,5 und einem NCO-Gehalt von 10 bis 65 Gew.-% mit mindestens einer der folgenden Komponenten
B) 0 bis 75 Äquivalent-%, bezogen auf die Isocyanatgruppen von A), einer einwertigen Alkoholkomponente, bestehend aus mindestens einem einwertigen Polyetheralkohol des Molekulargewichtsbereichs 150 bis 5000 mit einem Gehalt an Ethylenoxideinheiten von 40 bis 99,5 Gew.-%, der durch Alkoxylierung eines einwertigen Startermoleküls und gegebenenfalls im Anschluß an die Alkoxylierung durchgeführte Modifizierung des Alkoxylierungsprodukts durch Anlagerung von ε-Caprolacton in einer Menge von bis zu 40 Gew.-%, bezogen auf das Gewicht des einwertigen Alkohls, hergestellt worden ist,
C) 0 bis 75 Äquivalent-% bezogen auf die Isocyanatgruppen von A), einer einwertigen Alkoholkomponente, bestehend aus mindestens einem, von den Alkoholen der Komponente B) verschiedenen, einwertigen Alkohol des Molekulargewichtsbereich 32 bis 5000,
D) 0 bis 35 Äquivalent-%, bezogen auf die Isocyanatgruppen von A), einer Aminkomponente, bestehend aus mindestens einem tertiären Amin des Molekulargewichtsbereichs 88 bis 250 mit einer gegenüber Isocyanatgruppen im Sinne der NCO-Additionsreaktion reaktionsfähigen Gruppe
   und
E) 0 bis 65 Äquivalent-%, bezogen auf die Isocyanatgruppen von A), an im Sinne der NCO-Additionsreaktion mindestens difunktionellen Aufbaukomponenten des Molekulargewichtsbereichs 32 bis 3000
unter Einhaltung einer NCO-Kennzahl von 100 bis 600 unter Urethan- und gegebenenfalls Harnstoffbildung hergestellt werden und die im Überschuß vorliegenden NCO-Gruppen durch gleichzeitig oder anschließend erfolgende Sekundärreaktionen bis auf einen Restgehalt von maximal 1,0 Gew.-% abreagiert werden.

Gegenstand der Erfindung sind weiterhin die nach dem erfindungsgemäßen Verfahren erhältlichen, Polyether- bzw. Polyesterketten aufweisenden Polyisocyanat-Additionsprodukte sowie deren Verwendung als Dispergierhilfsmittel für Feststoffe bei deren Einarbeitung in wäßrige und auch lösemittelhaltige Lacke und Beschichtungsmittel.

Der besondere Vorteil des erfindungsgemäßen Verfahrens zur Herstellung der erfindungsgemäßen Dispergierhilfsmittel ist die Möglichkeit, niedermolekulare, sehr niedrigviskose, großtechnisch verfügbare Polyisocyanate geringer Funktionalität als Ausgangskomponenten einzusetzen. Dabei kann auf die Verwendung von organischen Lösungsmitteln, die zur Erniedrigung der Viskosität bei Verwendung von höhermolekularen, höherfunktionellen Polyisocyanaten notwendig ist, verzichtet werden. Dadurch wird eine erhebliche Verfahrensvereinfachung erzielt, weil kein störendes organisches Lösungsmittel am Ende der Reaktion abdestilliert werden muß. Die nach dem erfindungsgemäßen Verfahren zugänglichen Dispergierhilfsmittel sind von ihrer chemischen Konstitution verschieden von den Dispergierhilfsmitteln, die nach dem Stand der Technik durch die Verwendung von höherfunktionellen Polyisocyanaten zugänglich sind. Die erfindungsgemäß erhältlichen Dispergiermittel sind daher neue chemische Verbindungen.

Die erfindungsgemäßen Polyisocyanat-Additionsprodukte stellen unter Urethanund gegebenenfalls Harnstoffbildung hergestellte Umsetzungsprodukte von Polyisocyanaten A) mit den Ausgangskomponenten B), C), D) und/oder E) dar, die gleichzeitig und/oder im Anschluß an die zur Urethan- und gegebenenfalls Harnstoffbildung führende Additionsreaktion durch Sekundärreaktionen von vorliegenden überschüssigen Isocyanatgruppen befreit worden sind

Der Gehalt der erfindungsgemäßen Umsetzungsprodukte an gegebenenfalls über die Komponente B) eingebauten Ethylenoxideinheiten (Molekulargewicht = 44) liegt bei 30 bis 95, vorzugsweise 40 bis 95 Gew.-%. Der Gehalt an freien Isocyanatgruppen liegt unter 1 Gew.-%, im allgemeinen sind freie Isocyanatgruppen nicht mehr nachweisbar.

Die zur Herstellung der erfindungswesentlichen Additionsprodukte eingesetzte Polyisocyanatkomponente A) weist eine (mittlere) NCO-Funktionalität von 1,7 bis 2,5 vorzugsweise 1,8 bis 2,4 und einen NCO-Gehalt von 10 bis 65, vorzugsweise 12 bis 60 Gew.-% auf. Die Polyisocyanatkomponente A) besteht aus mindestens einem organischen Polyisocyanat. Geeignete Polyisocyanate sind unmodifizierte Diisocyanate oder den gemachten Angaben bezüglich NCO-Gehalt und -Funktionalität entsprechende Modifizierungsprodukte der an sich bekannten Polyisocyanate, insbesondere Diisocyanate. Die Polyisocyanatkomponente A) kann darüber hinaus auch noch Monoisocyanate in einer Menge von bis zu 20 Gew.-% enthalten. Auch können diese Monoisocyanate dem Reaktionsgemisch während oder nach der Reaktion der Komponente A) mit den Komponenten B) bis E) zugegeben werden und nehmen dann im weiteren Verlauf der Reaktion am Aufbau der erfindungsgemäßen Dispergierhilfsmittel teil.

Unmodifizierte Polyisocyanate, die als Komponente A) oder als Teil der Komponente A) geeignet sind, sind beispielsweise die Polyisocyanate der Diphenylmethan-Reihe, wie sie neben den entsprechenden Diisocyanaten bei der Phosgenierung von Anilin/Formaldehyd-Kondensaten anfallen.

Im allgemeinen bestehen die Polyisocyanate der Komponente A) jedoch aus den bereits angesprochenen einfachen Polyisocyanaten, insbesondere Diisocyanaten bzw. deren Modifizierungsprodukte, welche dann die gemachten Angaben bezüglich Funktionalität und NCO-Gehalt erfüllen. Unter "Modifizierung" ist in diesem Zusammenhang insbesondere die Herstellung von Biuret-, Urethan-, Allophanat-, Uretdion- und/oder Isocyanuratgruppen aufweisenden Derivaten von einfachen Polyisocyanaten, insbesondere Diisocyanaten zu verstehen. Zur Herstellung derartiger Derivate einzusetzende Diisocyanate sind beispielsweise Hexamethylendiisocyanat, Cyclohexan-1,3- und -1,4-Diisocyanat sowie beliebige Gemische dieser Isomeren, 1-Isocyanato-3,3,5-trimethyl-5-isocyanatomethylcyclohexan, 2,4- und 2,6-Hexahydrotoluylendiisocyanat sowie beliebige Gemische dieser Isomeren, Perhydro-2,4'- und/oder -4,4'-diphenylmethandiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat. Gegebenenfalls mitzuverwendende Monoisocyanate sind beispielsweise 1-Isocyanatobutan, 1-Isocyanatohexan, 1-Isocyanatooctadecan, Cyclohexylisocyanat, Phenylisocyanat, die isomeren Toluylenisocyanate, Benzylisocyanat und 1-Naphthylisocyanat.

Besonders bevorzugt werden zur Herstellung der modifizierten Diisocyanate die technisch wichtigen Polyisocyanate verwendet, wie beispielsweise 2,4-Diisocyanatotoluol, dessen technische Gemische mit bis zu 35 Gew.-%, bezogen auf Gemisch, an 2,6-Diisocyanatotoluol, 4,4'-Diisocyanatodiphenylmethan, dessen technische Gemische mit 2,4'- und 2,2'-Diisocyanatodiphenylmethan, 1,6-Diisocyanatohexan, 1,4-Diisocyanatobutan, 1-Isocyanato-3,3,5-trimethyl-5-isocyanatomethylcyclohexan, 1-Isocyanato-3(4)-isocyanatomethyl-1-methylcyclohexan oder Gemische dieser Diisocyanate. Ganz besonders bevorzugt handelt es sich bei den Polyisocyanaten der Komponente A) um einfache Diisocyanate wie beispielsweise 2,4-Diisocyanatotoluol oder dessen technischen Gemische mit bis zu 35 Gew.-%, bezogen auf Gemisch, an 2,6-Diisocyanatotoluol. Diese besonders bevorzugten Diisocyanate weisen im allgemeinen einen NCO-Gehalt von 12 bis 60 Gew.-% bei einer NCO-Funktionalität von 2,0 auf.

Die Polyisocyanatkomponente A) kommt lösungsmittelfrei zum Einsatz. Die Anwesenheit eventuell aus der Herstellung der Komponenten stammender geringer Mengen inerter Lösungsmittel, wie beispielsweise Butylacetat, stört jedoch nicht.

Die einwertige Alkoholkomponente B) besteht aus mindestens einem einwertigen Alkohol mit einem (aus dem Hydroxylgruppengehalt berechenbaren) Molekulargewicht von 150 bis 5000, vorzugsweise 500 bis 3000, der 40 bis 99,5, vorzugsweise 44 bis 99,5 und besonders bevorzugt 60 bis 99,5 Gew.-%, bezogen auf das Gesamtgewicht des einwertigen Alkohols, an innerhalb einer Polyetherkette eingebauten Ethylenoxideinheiten aufweist. Als Komponente B) oder als Teil der Komponente B) geeignet sind demzufolge an sich bekannte Alkoxylierungsprodukte von einwertigen Startermolekülen, die pro Molekül im statistischen Mittel mindestens 3, vorzugsweise 7 bis 100 Alkylenoxideinheiten aufweisen, die ihrerseits zu mindestens 30 Gew.-%, vorzugsweise 40 und besonders bevorzugt 60 bis zu 100 Gew.-% aus Ethylenoxideinheiten bestehen. Die einwertigen Alkohole, die als Komponente B) oder als Teil der Komponente B) in Betracht kommen, müssen nicht unbedingt ausschließlich aus derartigen Alkoxylierungsprodukten von einwertigen Startermolekülen bestehen, sondern können auch Modifizierungsprodukte derartiger Ethergruppen aufweisender Monoalkohole darstellen. Geeignete Modifizierungsprodukte sind insbesondere die Anlagerungsprodukte von ε-Caprolacton im Sinne einer ringöffnenden Esterbildung an die vorab hergestellten Alkoxylierungsprodukte. Diese modifizierten einwertigen Alkohole weisen bis zu 40 Gew.-% an endständigen ε-Caprolacton-Einheiten (berechnet als C₆H₁₀O₂, Molekulargewicht =114) auf.

Zur Herstellung der einwertigen Polyetheralkohole geeignete Startermoleküle sind insbesondere einwertige Alkohole, Phenole oder Carbonsäuren. Die Startermoleküle weisen im allgemeinen 1 bis 30, vorzugsweise 1 bis 10 und besonders bevorzugt 1 bis 4 Kohlenstoffatome auf. Beispielhaft genannt seien Alkohole wie Methanol, Ethanol, n-Propanol, n-Butanol, 1-Pentanol, 1-Hexanol, 1-Octanol, Oleylalkohol oder Benzylalkohol oder Phenole wie beispielsweise Phenol, Kresole, Methylphenole, Nonylphenole oder Dodecylphenole oder alkoxylierbare Säuren wie beispielsweise Essigsäure, Buttersäure, Caprin, Laurin, Palmitin oder Stearinsäure oder auch Cyclohexancarbonsäure. Die bevorzugten Startermoleküle sind einwertige Alkohole mit 1 bis 4 Kohlenstoffatomen der oben beispielhaft genannten Art.

Zur an sich bekannten Alkoxylierungsreaktion werden Ethylenoxid oder Kombinationen aus Ethylenoxid mit bis zu 60, vorzugsweise bis zu 56 und besonders bevorzugt bis zu 40 Gew.-%, bezogen auf die Gesamtmenge der Alkylenoxide, an anderen Alkylenoxiden wie insbesondere Propylenoxid verwendet. Falls außer Ethylenoxid auch andere Alkylenoxide mitverwendet werden, kann dies unter Verwendung entsprechender Alkylenoxidgemische oder auch unter sukzessiver Addition der Alkylenoxide unter Blockbildung erfolgen.

Die Komponente B) kommt in einer Menge von 0 bis 75, vorzugsweise 0 bis 65 und besonders bevorzugt 10 bis 50 Äquivalent-%, bezogen auf die Isocyanatgruppen der Komponente A) zum Einsatz.

Die Komponente C) besteht aus mindestens einem anderem, den unter B) gemachten Ausführungen nicht entsprechendem einwertigen Alkohol des Molekulargewichtsbereichs 32 bis 5.000. In Betracht kommen insbesondere die bekannten einwertigen Alkohole wie z.B. Methanol, Ethanol, Propanol, Isopropanol, 1- und 2-Butanol, Isobutanol, 1-Hexanol, 2-Ethyl-1-hexanol etc., darüberhinaus einwertige Esteralkohole des Molekulargewichtsbereichs 94 bis 350 wie beispielsweise Hydroxybuttersäuremethylester, Ethylenglykolmonoacetat, 2,2-Dimethylhydroxypropionsäuremethylester, Milchsäurepropylester oder ω-Hydroxycapronsäureethylester oder einwertige Alkohole des Molekulargewichtsbereichs 146 bis 2000, die durch an sich bekannte Anlagerung von ε-Caprolacton an einwertige Alkohole der bereits oben beispielhaft genannten Art erhalten worden sind.

Beliebige Gemische der einwertigen Alkohole und "Esteralkohole" bzw. der einwertigen Esteralkohole auf Caprolacton-Basis können selbstverständlich auch eingesetzt werden. Die Komponente C) wird in einer Menge von 0 bis 75, vorzugsweise 0 bis 65 Äquivalent-%, bezogen auf die Isocyanatgruppen der Komponente A) verwendet. Besonders bevorzugt wird auf die Mitverwendung der Komponente C) verzichtet.

Bei der Komponente D) handelt es sich um organische Verbindungen, die neben mindestens einer tert.-Aminogruppe eine gegenüber Isocyanatgruppen im Sinne der Isocyanat-Additionsreaktion reaktionsfähige Gruppe, insbesondere Hydroxyl- oder Aminogruppe aufweisen. Diese Verbindungen haben im allgemeinen ein Molekülgewicht von 88 bis 250, insbesondere von 88 bis 150.

Als Komponente D) bzw. als Teil der Komponente D) kommen beispielsweise Aminoalkohole wie N,N-Diethylethanolamin, N,N-Dimethylethanolamin, N,N-Dimethylisopropanolamin, N,N-Dimethyl-1,3-propandiamin, N,N-Diethylethylendiamin, 2-Dibutylamino-ethanol, 3-(Dimethylamino)-1-propanol, 1-Methylpiperazin, 1-Methyl-4-piperidinol, 2-Morpholinoethanol, 2-Piperidinoethanol, 2-Piperazinoethanol, 2-Piperazinoethylamin, 3-Morpholinopropylamin, N,N-Dibutyl-trimethylendiamin, 3-(Diethylamino)-1-propanol, N-Methyl-3-pyrrolidinol, 2-(Hydroxymethyl)-N-methylpiperidin oder mindestens eine tert.-Aminogruppe und eine primäre oder sekundäre Aminogruppe aufweisende Polyamine in Betracht. Beispiele derartiger Verbindungen sind N,N-Dimethyl-ethylendiamin, N,N-Diethyl-1,4-butandiamin oder N-Methyl-piperazin.

Zu den bevorzugten Verbindungen, die als Komponente D) bzw. als Teil der Komponente D) zum Einsatz gelangen, gehören 4-(2-Hydroxyethyl)-pyridin, 2-Hydroxyethylmorpholin, N,N-Dimethyl-1,3-propandiamin, N,N-Diethyl-1,4-butandiamin, N,N-Dimethylethanolamin und N,N-Diethylethanolamin.

Die Komponente D) kommt in einer Menge von 0 bis 35, vorzugsweise 3 bis 30 und besonders bevorzugt 5 bis 25 Äquivalent-%, bezogen auf die Isocyanatgruppen der Komponente A) zum Einsatz. Vorzugsweise wird die Komponente D) in einer solchen Menge mitverwendet, daß in den erfindungswesentlichen Additionsprodukten 0 bis 200, vorzugsweise 2 bis 200 und insbesondere 5 bis 100 Milli-äquivalente an tert.-Aminogruppen pro 100 g Feststoff vorliegen.

Bei der Komponente E) handelt es sich um organische Verbindungen des Molekulargewichtsbereichs 32 bis 3000, vorzugsweise 62 bis 2000 mit mindestens zwei gegenüber Isocyanatgruppen reaktionsfähigen Gruppen, insbesondere mit mindestens zwei alkoholischen Hydroxylgruppen. Beispielhaft genannt seien insbesondere Polyester- oder Polyetherdiole der an sich bekannten Art des genannten Molekulargewichtsbereichs sowie niedermolekulare Diole, Triole oder höherfunktionelle Alkohole, wie z. B. Ethylenglykol, Butandiol-1,3 und -1,4, Hexandiol-1,6, Neopentylglykol, Cyclohexan-1,4-dimethanol, Propandiol-1,2 und -1,3, Trimethylolpropan, Pentaerythrit oder Sorbit. Es können jedoch auch Hydrazine oder Amine mit mindestens zwei gegenüber Isocyanatgruppen reaktionsfähigen Gruppen eingesetzt werden, bzw. Mischungen der genannten Verbindungen.

Die Komponente E) wird bei der Herstellung der erfindungswesentlichen Additionsverbindungen, falls überhaupt, in einer Menge von bis zu 65, vorzugsweise bis zu 55 und besonders bevorzugt bis zu 50 Äquivalent-%, bezogen auf die Isocyanatgruppen der Komponente A) eingesetzt.

Bei der Herstellung der erfindungswesentlichen Additionsprodukte aus den beispielhaft genannten Ausgangsmaterialien A) bis E) kann nach unterschiedlichen Methoden gearbeitet werden. Im allgemeinen erfolgt die Umsetzung in der Schmelze bei Temperaturen von 0 bis 250, vorzugsweise 20 bis 140°C. Hierbei kann man beispielsweise so vorgehen, daß man die Isocyanatkomponente A) mit einem Gemisch der Komponente B) und gegebenenfalls C), D) und/oder E) umsetzt oder aber zunächst aus der Komponente A) und einem Teil der Reaktionspartner B) bis E) ein NCO-Prepolymer herstellt, welches anschließend in einer 2. Stufe mit dem Rest der Reaktionspartner mit gegenüber Isocyanatgruppen reaktionsfähigen Gruppen zur Reaktion gebracht wird.

Danach wird der NCO-Überschuß durch Sekundärreaktionen bis auf einen Restgehalt von maximal 1,0 Gew.-%, vorzugsweise von 0,5 Gew.-% und besonders bevorzugt 0,2 Gew.-% reduziert. Bei diesen Sekundärreaktionen kann es sich beispielsweise um die Bildung von Allophanatgruppen, Biuretgruppen, Uretdiongruppen oder von Isocyanuratgruppen durch entsprechende Additions- bzw. Polymerisationsreaktionen der überschüssigen NCO-Gruppen handeln. Derartige Reaktionen werden oftmals von den vorliegenden tert.-Stickstoffatomen katalysiert und durch 0,1 bis 24-stündiges Erhitzen auf 60 bis 250°C bewirkt. Bevorzugt als Sekundärreaktionen sind Polymerisationsreaktionen bei denen Uretdiongruppen und/oder Isocyanuratgruppen entstehen

Besonders bevorzugt als Sekundärreaktionen ist die Polymerisation der restlichen NCO-Gruppen unter Ausbildung von Isocyanuratstrukturen, die sich unter Katalyse der gegebenenfalls aus der Komponente D) stammenden tert.-Stickstoffatomen ausbilden oder durch Zugabe von weiteren Trimerisierungskatalysatoren entstehen.

Geeignete Katalysatoren zur Trimerisierung der überschüssigen NCO-Gruppen bei dem erfindungsgemäßen Verfahren sind alle bislang zur Herstellung von Isocyanuratpolyisocyanaten eingesetzten Verbindungen. Zu nennen sind dabei Oxide, wie z. B. Lithiumoxid oder Bis-[tributylzinn]-oxid; Alkanolate wie, z. B. Natriummethanolat oder Kalium-tert.-butanolat; Phenolate, wie z. B. 2-Methyl-4-(tetrahydrothiophenylio)-phenoayl; Hydride, wie z. B. Natriumboranat; Hydroxide, wie z. B. Quartäre Ammonium-, Phosphonium-, Arsonium-, Stibonium-hydroxide oder Kaliumhydroxid/Kronenether; Amine, wie z. B. Triethylamin, Benzyl-dimethylamin, Mannichbasen von Phenolen, Pyrazine oder 1-(2-Hydroxyethyl)-aziridin; Amide, wie z. B. Acrylamide und Carbamidsäureester; Aminimide, wie z. B. N,N-Dimethyl-N-(2-hydroxypropyl)-laurinimid; Phosphane, wie z. B. tert. Phosphane; Carboxylate, wie z. B. Natriumformiat; Kaliumacetat oder Tetraethylammonium-2-ethylhexanoat; Borate; metallorganische Verbindungen; Metallchelate; Säuren bzw. Lewissäuren, wie z. B. Chlorwasserstoff, Aluminiumchlorid; Friedel-Crafts-Katalysatoren oder Tetramethylammonium-dibutylphosphat. Ferner sind eine Reihe von Stoffkombinationen, die je für sich allein nur wenig oder nicht wirksam sind, gute Trimerisierungskatalysatoren, wie z. B. Tetraethylammoniumjodid/(Phenoxymethyl)-oxiran, 1,4-Diaza-bicyclo[2,2,2]octan/(Phenoxymethyl)-oxiran oder Cyclohexyl-dimethylamin/Tetramethylammonium-2-ethylhexanoat. Eine ausführliche Übersicht über Katalysatoren für die Trimerisierung von Isocyanatgruppen mit entsprechenden Hinweisen auf die Originalliteratur ist zu finden in Houben-Weyl, Methoden der Organischen Chemie, Band E, 20 (1987), Seiten 1741 - 1751, Georg Thieme Verlag Stuttgart, New York.

Obwohl das erfindungsgemäße Verfahren vorzugsweise in Substanz durchgeführt wird, ist es auch möglich, beispielsweise zur Erniedrigung der Viskosität inerte Lösungsmittel mitzuverwenden. Geeignete Lösungsmittel sind beispielsweise Dimethylformamid, N-Methylpyrrolidon, Dimethylacetamid, Aceton, 2-Butanon, Essigsäureethylester, Essigsäurebutylester, Methoxypropylacetat, Toluol oder Gemische derartiger Lösungsmittel. Im allgemeinen werden die Lösungsmittel im Verlauf oder im Anschluß an die Umsetzung, beispielsweise durch Destillation, entfernt. Die Verwendung von Lösemitteln der genannten Art ist jedoch bei dem erfindungsgemäßen Verfahren nicht bevorzugt.

Gegebenenfalls können auch an sich bekannte, die Isocyanat-Additionsreaktion beschleunigende, Katalysatoren mitverwendet werden. Beispielhaft genannt seien Triethylamin, N,N-Dimethylbenzylamin oder Zinnverbindungen wie beispielsweise Zinn(II)-octoat oder Dibutylzinndilaurat.

Die erfindungsgemäßen Polyisocyanat-Additionsprodukte stellen Dispergiermittel für Feststoffe, insbesondere Pigmente oder Füllstoffe bei der Herstellung von entsprechenden wäßrigen Lacken oder Beschichtungsmitteln dar. Bei dieser erfindungsgemäßen Verwendung kommen die erfindungsgemäßen Polyadditionsverbindungen in einer Menge zum Einsatz, die 0,1 bis 200 Gew.-%, vorzugsweise 0,5 bis 175 Gew.-%, insbesondere 1 bis 150 Gew.-%, bezogen auf das Gewicht der Feststoffe beträgt. Die erfindungsgemäßen Verbindungen können bei der erfindungsgemäßen Verwendung entweder vorab mit den zu dispergierenden Feststoffen vermischt werden oder direkt in dem Dispergiermittel (Wasser) vor oder gleichzeitig mit der Zugabe der Feststoffe gelöst werden. Im allgemeinen ist es jedoch bevorzugt, die erfindungsgemäßen Polyadditionsverbindungen vor dem Dispergierprozeß auf die Feststoffe durch intensives Vermischen, aufzubringen.

Die erfindungsgemäßen Dispergiermittel eignen sich zur Erleichterung der Dispergierung von beliebigen Feststoffen, insbesondere von Pigmenten und Füllstoffen.

Als Pigmente können in diesem Zusammenhang beispielsweise anorganische oder organische Pigmente, sowie Ruße genannt werden. In Betracht zu ziehende anorganische Pigmente sind beispielsweise Titandioxide, Eisenoxide oder Spinelle, organische Pigmente sind beispielsweise Azopigmente, z. B. Pigmente der Monoazoreihe, Acetessigsäure-Derivate, Derivate der 2,3-Oxinaphtholsäure, 2,3-Oxinaphtholsäurearylamid-Derivate, Pigmente der Diazoreihe, Abkömmlinge des 3,3-Dichlorbenzidins, Diarylgelbtypen, kondensierte Diazopigmente, Metallkomplex-Pigmente, anthrachinoide Pigmente, Phthalocyaninpigmente, polycyclische Pigmente, insbesondere solche der Anthrachinon-, Thioindigo-, Chinacridon-, Dioxazin-, Pyrrolo-Pyrrol-, Naphthalintetracarbonsäure-, Pterylen-, Isoamidolin(on)-, Flavanthron-, Pyranthron- oder Isoviolanthron-Reihe.

Bevorzugte Pigmente sind β- und γ-Kristallmodifikationen des unsubstituierten linearen Chinacridons sowie Mischkristalle aus 2,9-Dimethylchinacridon und unsubstituierten Chinacridonen.

Besonders bevorzugt eignen sich die erfindungsgemäßen Dispergiermittel zum Dispergieren von Ruß in wäßrigen Lacksystemen.

Füllstoffe, die erfindungsgemäß in wäßrigen Lacken dispergiert werden können, sind beispielsweise solche auf Basis von Kaolin, Talkum, anderen Silikaten, Kreide, Glasfasern, Glasperlen oder Metallpulvern.

Als Lacksysteme, in denen erfindungsgemäß die beispielhaft genannten Festkörper dispergiert werden können, kommen beliebige wäßrige 1K- oder 2K-Lacke in Betracht. Beispielhaft genannt seien wäßrige 1K-Lacke wie beispielsweise solche auf Basis von Alkyd-, Acrylat-, Epoxid-, Polyvinylacetat-, Polyester- oder Polyurethanharzen oder wäßrige 2K-Lacke, beispielsweise solchen auf Basis von (i) Hydroxylgruppen aufweisenden Polyacrylat-, Polyester-, Polyurethan-, Polyester/Polyacrylat-, Polyurethan/Polyacrylat- oder Polyester/Polyurethanharzen und (ii) Melaminharzen, Polyisocyanaten oder blockierten Polyisocyanaten als Vernetzer. Auch wäßrige Beschichtungsmittel auf Basis von Polyepoxidharzen kommen in Betracht.

Die erfindungsgemäßen Polyisocyanat-Polyadditionsprodukte können im übrigen auch als Netz- oder Dispergiermittel bei der Einarbeitung von Feststoffen, insbesondere von Pigmenten in Kunststofformulierungen verwendet werden.

### Beispiele

- Komponente A1):: 2,4-Toluylendiisocyanat (Desmodur T 100® der Bayer AG)
- Komponente A2):: 4,4'-Diphenylmethandiisocyanat (Desmodur 44® der Bayer AG)
- Komponente B:: einwertiger Polyetheralkohol des Molekulargewichts 2250 mit einem Ethylenoxidgehalt von 87,5 Gew.-%, hergestellt durch Alkoxylierung von n-Butanol unter Verwendung eines Gemisches aus Ethylenoxid und Propylenoxid.
- Komponente D:: N,N-Dimethylethanolamin
- Komponente E):: 1,1,1-Tris-(hydroxymethyl)-propan (Trimethylolpropan)

### Beispiel 1 (erfindungsgemäß)

In einem 1 l-Dreihalskolben mit Rührer, Rückflußkühler und Thermometer werden 202,5 g der Komponente B) vorgelegt und 2 Stunden bei 120°C und einem Druck von 10 mbar entwässert. Dann wird auf 25°C abgekühlt, 15,66 g der Komponente A1) und 1,34 g der Komponente E) zugegeben. Es wird auf 80°C erhitzt und so lange gerührt, bis ein NCO-Gehalt von ca. 1,2 % erreicht ist. Dann werden 4,0 g der Komponente D) zugegeben und so lange gerührt, bis im IR-Spektrum keine NCO-Bande mehr zu sehen ist. Man erhält eine wasserlösliche Polyadditionsverbindung, die zur Dispergierung von Pigmenten oder zur Dispergierung und Oberflächenbehandlung von beliebigen Füllstoffen verwendet werden kann.

### Beispiel 2 (erfindungsgemäß)

Die Herstellung erfolgt analog Beispiel 1, jedoch werden anstelle der Komponente A1) 22,5 g der Komponente A2) eingesetzt.

### Beispiel 3 (erfindungsgemäß)

In einer Apparatur wie in Beispiel 1 werden 200,0 g der Komponente B) vorgelegt und entwässert. Dann werden bei 80°C 33,78 g der Komponente A1) zugegeben und so lange bei 80°C gerührt, bis ein NCO-Gehalt von ca. 5,4 % erreicht ist.

Danach werden 3,96 g der Komponente D) zugegeben und 20 Minuten bei 80°C gerührt. Anschließend werden 0,2 g 2,4,6-Tris-(dimethylaminomethyl)-phenol zugegeben und so lange bei 80°C gerührt, bis im IR-Spektrum keine NCO-Bande mehr zu sehen ist. Man erhält eine Isocyanuratgruppen enthaltende wasserlösliche Polyadditionsverbindung, die zur Dispergierung von Pigmenten oder zur Dispergierung und Oberflächenbehandlung von beliebigen Füllstoffen geeignet ist.

### Beispiel 4 (erfindungsgemäß)

Die Herstellung der Polyadditionsverbindung erfolgt analog Beispiel 3, jedoch wird auf die Zugabe von 2,4,6-Tris-(dimethylaminoethyl)-phenol verzichtet und so lange gerührt, bis im IR-Spektrum keine NCO-Bande mehr zu sehen ist. Die Reaktionszeit ist im Vergleich zu dem Produkt gemäß Beispiel 3 um ca. 10 % länger.

### Beispiel 5 (erfindungsgemäß)

In einer Apparatur wie in Beispiel 1 werden 39,2 g der Komponente A1) unter Stickstoffatmosphäre vorgelegt und auf 40°C erwärmt. Dann werden 0,12 g 2,4,6-Tris-(dimethylaminomethyl)-phenol zugegeben. Es wird so lange bei 40°C gerührt, bis ein NCO-Gehalt von ca. 33 % erreicht ist. Die Funktionalität der vorliegenden Polyisocyanatmischung beträgt dann 2,36. Nun werden 202,5 g der Komponente B) zugegeben, auf 80°C erhitzt und so lange gerührt, bis ein NCO-Gehalt von ca. 1,4 % erreicht ist. Dann werden 4,0 g der Komponente D) zugegeben und so lange bei 80°C gerührt, bis im IR-Spektrum keine NCO-Bande mehr zu sehen ist. Man erhält eine Isocyanuratgruppen enthaltende wasserlösliche Polyadditionsverbindung, die zur Dispergierung von Pigmenten oder zur Dispergierung und Oberflächenbehandlung von beliebigen Füllstoffen geeignet ist.

### Beispiel 6 (nicht erfindungsgemäß)

In einer Apparatur wie in Beispiel 1 werden 292,5 g der Komponente B) vorgelegt und entwässert. Bei 80°C gibt man 105,0 g einer 51 %igen Lösung in Butylacetat eines Isocyanuratgruppen aufweisenden Polyisocyanats auf Basis 2,4-Diisocyanatotoluol mit einem NCO-Gehalt der Lösung von 8,0 % und einer NCO-Funktionalität von > 3 (®Desmodur IL der Bayer AG) zu und rührt so lange, bis der NCO-Gehalt ca. 0,75 % beträgt. Anschließend gibt man 5,4 g der Komponente D) zu und rührt bei 80°C so lange, bis keine NCO-Bande mehr im IR-Spektrum zu sehen ist. Danach wird eine Destillationsbrücke aufgesetzt und das Lösungsmittel bei einer Temperatur von ca. 80 - 100°C und einem Druck von 10 mbar abdestilliert. Man erhält eine lösemittelfreie wasserlösliche Polyadditionsverbindung, die zur Dispergierung von Pigmenten oder zur Dispergierung und Oberflächenbehandlung von beliebigen Füllstoffen geeignet ist.

Ein Vergleich der IR-Spektren der Dispergierhilfsmittel der Beispiele 3 und 6 zeigt deutliche Unterschiede, so daß gesichert ist, daß es sich um chemisch verschiedene Substanzen handelt. Das erfindungsgemäße Verfahren hat im Vergleich zu dem Verfahren gemäß Beispiel 6 den Vorteil, daß lösemittelfrei gearbeitet werden kann und daher kein Destillationsschritt erforderlich ist.

### Beispiele 7 bis 11 (Verwendung)

### Herstellung der Netzmittellösungen:

Die wasserlöslichen Polyadditionsverbindungen aus den Beispielen 1 bis 6 werden unter Erwärmung auf 65 bis 70°C in Wasser gelöst und auf einen Feststoffgehalt von 40 % eingestellt. Man erhält klare Lösungen, die als Netzmittel zur Herstellung wäßriger Lackformulierungen verwendet werden können.

### Herstellung der Pigmentpasten:

In eine 300 ml Rundglasflasche werden 15,0 g Schwarzpigment (Farbruß FW 200, Handelsprodukt Fa. Degussa, 0,2 g Entschäumer (Nopco 8034 E, Handelsprodukt Fa. Münzing Chemie), 0,7 g Propylenglykol, 28,6 g Netzmittel und 150 g Glasperlen (Durchmesser = 3 mm) gegeben und durch Schütteln in einem handelsüblichen Dispergator 90 Min. dispergiert. Anschließend werden die Glasperlen abfiltriert.

### Lackherstellung, Auftragung und Beurteilung:

In einer 100 ml Rundglasflasche werden unter 20 g Glasperlen (Durchmesser = 3 mm), 5,0 g Pigmentpaste, 0,3 g Antioxidanz (Ascinin R® konz., Handelsprodukt Fa. Bayer AG), 45,0 g wäßriges Alkydharz (Resydrol AY 586W®, Handelsprodukt Fa. Hoechst AG) und 0,3 g Sikativ (Octa Soligen Co 7 aqua®, Handelsprodukt Fa. Borchers GmbH) im Dispergator 30 Min. homogenisiert und anschließend die Glasperlen abfiltriert. Nach einer Reifezeit von ca. 12 Stunden werden 100 µm Naßfilme auf entfettete Glasplatten aufgezogen. Nach Tag Lagerung bei Raumtemperatur wird gemäß DIN 67530, ISO 2813, ASTM D 523 der Haze Gloss (Glanzschleier) und der Glanz nach Gardner (Winkel 20 °) gemessen. Die Meßergebnisse sind in Tabelle 1 aufgeführt.

**Tabelle 1**

| Beispiel | Lack mit Polyadditionsverbindung aus Beispiel | Glanz 20° | Haze Gloss |
|---|---|---|---|
| 7 | 1 | 81,0 | 12,1 |
| 8 | 2 | 80,7 | 9,6 |
| 9 | 3 | 81,0 | 10,0 |
| 10 | 4 | 81,3 | 11,9 |
| 11 | 5 | 82,0 | 11,0 |
| Vergleich 1 | 6 | 80,5 | 12,9 |
| Vergleich 2 | Lösemittel enthaltendes Netz- und Dispergiermittel gemäß EP-A 0 154 678 | 80,9 | 30,7 |

## Patentansprüche

1. Verfahren zur lösungsmittelfreien Herstellung von Dispergierhilfsmitteln für die Einarbeitung von Feststoffen in wässrige Lacke und/oder Beschichtungsmittel, **dadurch gekennzeichnet, dass**
A) eine Polyisocyanat-Komponente einer (mittleren) NCO-Funktionalität von 1,7 bis 2,5 und einem NCO-Gehalt von 10 bis 65 Gew.-%,
mit
B) bis zu 75 Äquivalent-%, bezogen auf die Isocyanatgruppen von A), einer einwertigen Alkoholkomponente, bestehend aus mindestens einem einwertigen Polyetheralkohol des Molekulargewichtsbereichs 150 bis 5000 mit einem Gehalt an Ethylenoxideinheiten von 40 bis 99,5 Gew.-%, der durch Alkoxylierung eines einwertigen Startermoleküls und gegebenenfalls im Anschluß an die Alkoxylierung durchgeführte Modifizierung des Alkoxylierungsprodukts durch Anlagerung von ε-Caprolacton in einer Menge von bis zu 40 Gew.-%, bezogen auf das Gewicht des einwertigen Alkohols, hergestellt worden ist,
und mindestens einer der folgenden Komponenten
C) bis zu 75 Äquivalent-%, bezogen auf die Isocyanatgruppen von A), einer einwertigen Alkoholkomponente, bestehend aus mindestens einem, von den Alkoholen der Komponente B) verschiedenen, einwertigen Alkohol des Molekulargewichtsbereichs 32 bis 5000,
D) bis zu 35 Äquivalent-%, bezogen auf die Isocyanatgruppen von A), einer Aminkomponente, bestehend aus mindestens einem tertiären Amin des Molekulargewichtsbereichs 88 bis 250 mit einer gegenüber Isocyanatgruppen im Sinne der NCO-Additionsreaktion reaktionsfähigen Gruppe
und
E) bis zu 65 Äquivalent-%, bezogen auf die Isocyanatgruppen von A), an im Sinne der NCO-Additionsreaktion mindestens difunktionellen Aufbaukomponenten des Molekulargewichtsbereichs 32 bis 3000
unter Einhaltung einer NCO-Kennzahl von 100 bis 600 unter Urethan- und gegebenenfalls Harnstoffbildung umgesetzt wird, wobei die im Überschuß vorliegenden NCO-Gruppen durch gleichzeitig oder anschließend erfolgende Sekundärreaktionen bis auf einen Restgehalt von maximal 1,0 Gew.-% abreagiert werden.

2. Verfahren gemäß Anspruch 1, **dadurch gekennzeichnet, dass** es sich bei der Sekundarreaktion zum Abreagieren der überschüssigen NCO-Gruppen um eine Dimerisierungsreaktion handelt.

3. Verfahren gemäß Anspruch 1, **dadurch gekennzeichnet, dass** es sich bei der Sekundärreaktion zum Abreagieren der überschüssigen NCO-Gruppen um eine Trimerisierungsreaktion handelt.

4. Verfahren gemäß Anspruch 1, **dadurch gekennzeichnet, dass** es sich bei der Sekundärreaktion zum Abreagieren der überschüssigen NCO-Gruppen um eine Additionsreaktion handelt.

5. Wasserlösliche, hydrophile Polyetherketten aufweisende Polyisocyanat-Additionsprodukte mit einem Gehalt an Isocyanatgruppen von max. 1,0 Gew.-% und einem Gehalt an über monofunktionelle Alkohole B) eingebauten, innerhalb von Polyetherketten angeordneten Ethylenoxideinheiten (Molekulargewicht = 44) von 30 bis 95 Gew.-% hergestellt nach dem Verfahren gemäß Anspruch 1.

6. Verwendung von Dispergierhilfsmitteln gemäß Anspruch 5 als Dispergiermittel bei der Einarbeitung von Feststoffen in wässrige Lacke oder Beschichtungsmittel.

## Claims

1. Process for the solvent-free production of dispersing assistants for incorporating solids into aqueous lacquers and/or coating compositions, **characterized in that**
A) a polyisocyanate component having an (average) NCO functionality of 1.7 to 2.5 and an NCO content of 10 to 65% by weight,
is reacted with
B) up to 75 equivalent %, based on the isocyanate groups of A), of a monohydric alcohol component consisting of one or more monohydric polyether alcohols of the molecular weight range 150 to 5 000 which have an ethylene oxide units content of 40 to 99.5% by weight and have been produced by the alkoxylation of a monofunctional initiator molecule and optionally (subsequent to the alkoxylation) modification of the alkoxylation product by addition reaction with ε-caprolactone in an amount of up to 40% by weight, based on the weight of monohydric alcohol,
and with one or more of the following components:
C) up to 75 equivalent %, based on the isocyanate groups of A), of a monohydric alcohol component consisting of one or more monohydric alcohols of the molecular weight range 32 to 5 000, which are different from the alcohols of component B),
D) up to 35 equivalent %, based on the isocyanate groups of A), of an amine component consisting of one or more tertiary amines of the molecular weight range 88 to 250 having a group capable of an NCO addition reaction with isocyanate groups
and
E) up to 65 equivalent %, based on the isocyanate groups of A), of formative components of the molecular weight range 32 to 3 000 which are at least difunctional in an NCO addition reaction,
by urethane and, as the case may be, urea formation to an NCO index of 100 to 600, excess NCO groups being reacted off to a residual level of not more than 1.0% by weight by secondary reactions which take place simultaneously or subsequently.

2. Process according to Claim 1, **characterized in that** the secondary reaction to react off excess NCO groups is a dimerization reaction.

3. Process according to Claim 1, **characterized in that** the secondary reaction to react off excess NCO groups is a trimerization reaction.

4. Process according to Claim 1, **characterized in that** the secondary reaction to react off excess NCO groups is an addition reaction.

5. Water-soluble polyisocyanate addition products which comprise hydrophilic polyether chains and contain not more than 1.0% by weight of isocyanate groups and 30 to 95% by weight of ethylene oxide units (molecular weight = 44) disposed within polyether chains and incorporated via monofunctional alcohols B), produced by the process according to Claim 1.

6. Use of dispersing assistants according to Claim 5 as dispersants in the incorporation of solids into aqueous lacquers or coating compositions.

## Revendications

1. Procédé pour préparer sans solvant des produits auxiliaires dispersants servant à incorporer des matières solides dans des vernis et/ou produits de revêtement aqueux, **caractérisé en ce que**
A) on fait réagir un composant polyisocyanate à une fonctionnalité (moyenne) en NCO de 1,7 à 2,5 et une teneur en NCO de 10 à 65 % en poids,
avec
B) jusqu'à 75 équivalents %, par rapport aux groupes isocyanate de A), d'un composant alcool monovalent consistant en au moins un polyéther-alcool monovalent de poids moléculaire 150 à 5 000, à une teneur en motifs d'oxyde d'éthylène de 40 à 99,5 % en poids, qui a été préparé par alcoxylation d'une molécule de départ monovalente et le cas échéant modification, après l'alcoxylation, du produit d'alcoxylation par fixation par addition d'ε-caprolactone en quantité allant jusqu'à 40 % du poids de l'alcool monovalent,
et au moins un des composants suivants :
C) jusqu'à 75 équivalents %, par rapport aux groupes isocyanate de A), d'un composant alcool monovalent consistant en au moins un alcool monovalent autre que ceux du composant B), de poids moléculaire 32 à 5 000,
D) jusqu'à 35 équivalents %, par rapport aux groupes isocyanate de A), d'un composant amine consistant en au moins une amine tertiaire de poids moléculaire 88 à 250, qui contient un groupe réactif avec les groupes isocyanate dans le sens de la réaction d'addition des NCO,
et
E) jusqu'à 65 équivalents %, par rapport aux groupes isocyanate de A), d'un composant de synthèse de poids moléculaire 32 à 3 000, au moins difonctionnel au sens de la réaction d'addition des NCO,
en maintenant un indice de NCO de 100 à 600, avec formation d'uréthanes et le cas échéant d'urées, les groupes NCO en excès étant ramenés à une teneur résiduelle de 1,0 % en poids au maximum par des réactions secondaires simultanées ou subséquentes.

2. Procédé selon la revendication 1, **caractérisé en ce que** la réaction secondaire servant à éliminer l'excès de groupes NCO est une réaction de dimérisation.

3. Procédé selon la revendication 1, **caractérisé en ce que** la réaction secondaire servant à éliminer l'excès de groupes NCO est une réaction de trimérisation.

4. Procédé selon la revendication 1, **caractérisé en ce que** la réaction secondaire servant à éliminer l'excès de groupes NCO est une réaction d'addition.

5. Produits d'addition de polyisocyanates à chaînes de polyéther hydrophiles, solubles dans l'eau, à une teneur en groupes isocyanate de 1,0 % en poids au maximum et une teneur en motifs d'oxyde d'éthylène (poids moléculaire = 44) introduits par les alcools monofonctionnels B) et insérés dans les chaînes de polyéther, de 30 à 95 % en poids, préparés par le procédé selon la revendication 1.

6. Utilisation des produits auxiliaires dispersants selon la revendication 5 en tant qu'agents dispersants pour l'incorporation de matières solides dans des vernis ou produits de revêtement aqueux.
